# EUROPÄISCHE PATENTSCHRIFT

(11) **EP 2 114 164 B1**
(45) Veröffentlichungstag und Bekanntmachung des Hinweises auf die Patenterteilung: **28.07.2010**
(21) Anmeldenummer: 07845311.5
(22) Anmeldetag: 28.12.2007
(51) Int. Cl.: A01N 47/44, A01P 1/00

(54) **VERWENDUNG VON POLYMEREN GUANIDINEN ZUM BEKÄMPFEN VON MIKROORGANISMEN**
USE OF POLYMERIC GUANIDINES FOR CONTROLLING MICROORGANISMS
UTILISATION DE GUANIDINES POLYMERES POUR LUTTER CONTRE DES MICRO-ORGANISMES

(30) Priorität: 29.12.2006 AT 21562006; 19.12.2007 EP 07150147
(43) Veröffentlichungstag der Anmeldung: 11.11.2009
(73) Patentinhaber: Aka Technology Gmbh, 1210 Wien (AT)
(72) Erfinder: OBERWALDER, Wolf, 5020 Salzburg (AT); HAMETNER, Christa, 1210 Wien (AT); SCHMIDT, Oskar, 1030 Wien (AT)
(74) Vertreter: Schwarz, Albin
(86) Internationale Anmeldenummer: PCT/AT2007/000589
(87) Internationale Veröffentlichungsnummer: WO 2008/080184

(56) Entgegenhaltungen:
- EP-A- 0 472 093
- WO-A-01/85676
- WO-A-2006/047800
- US-A- 3 475 375
- ALBERT MARTIN ET AL: "Structure-activity relationships of oligoguanidines: Influence of counterion, diamine, and average molecular weight on biocidal activities." BIOMACROMOLECULES, Bd. 4, Nr. 6, November 2003 (2003-11), Seiten 1811-1817, XP002490825 ISSN: 1525-7797

## Beschreibung

Die vorliegende Erfindung betrifft die Verwendung von polymeren Guanidinen zur Bekämpfung von Mikroorganismen.

Biozide Polymere auf der Basis von Guanidinium-Hydrochlorid, insbesondere deren Wirkung gegen *Escherichia coli-Bakterien* sind bereits bekannt (vgl. WO 01/85676). Weiterhin ist bereits bekannt, dass solche Guanidin-Derivate als fungizide Mittel verwendet werden können (vgl. WO 2006/047800). Von besonderer Bedeutung sind die Polymere Akacid^{®}, das Poly-[2-(2-ethoxy)-ethoxyethyl-guanidiniumchlorid], und Akacid plus^{®}, eine 3:1-Mischung aus Poly-(hexamethylenguanidiniumchlorid) und Poly-[2-(2-ethoxyrethoxyethyl)-guanidiniumchlorid] (vgl. Antibiotika Monitor, 22. Jahrgang, Heft 1/2/2006, Online-Ausgabe unter hap://www.antibiotikamonitor.at/06_12/06_12_inhalt.htm).

Da sich die ökologischen und ökonomischen Anforderungen an moderne biozide Mittel laufend erhöhen, beispielsweise was Wirkungsspektrum, Toxizität, Selektivität, Aufwandmenge, Rückstandsbildung und günstige Herstellbarkeit angeht, und außerdem z.B. Probleme mit Resistenzen auftreten können, besteht die ständige Aufgabe, neue Mittel zu entwickeln.

Darüberhinaus erfordert der universelle Einsatz zur Raum- und Oberflächendesinfektion Mittel, die mehrere Eigenschaften aufweisen sollten: sie müssen möglichst stark mikrobizid wirken und mit der Vernebelungstechnik austragbar sein, die Umgebung, wie z.B. elektronische Geräte, nicht angreifen bzw. korrodieren, sollten auf die Säugetiere und insbesondere den Menschen aber nicht toxisch wirken, und darüber hinaus noch umweltverhäglich sein. Bis heute ist kein Mittel bekannt, welches sämtliche dieser Anforderungen gleichzeitig in zufriedenstellendem Ausmaß erfüllt.

Die vorliegende Erfindung stellt eine Verwendung zur Verfügung, welches wenigstens in Teilaspekten die gestellte Aufgabe löst, da nun überraschenderweise gefunden wurde, dass sich polymere Guanidinium-Hydroxide besonders gut zur Bekämpfung von unerwünschten Mikroorganismen wie Bakterien, Hefen und Pilzen verwenden lassen.

Eine bevorzugte Ausführungsform der erfindungsgemäß verwendbaren Guanidinium-Hydroxide basieren auf einem Diamin, welches Oxyalkylenketten und/oder Alkylengruppen zwischen zwei Aminogruppen enthält, und insbesondere bevorzugt erhältlich ist durch Polykondensation eines Guanidin-Säureadditionssalzes mit dem Diamin, wobei ein Polykondensationsprodukt in Salzform erhalten wird, welches anschließend durch basischen Anionenaustausch in die Hydroxidform übergeführt wird.

Die als Ausgangsstoffe für diese Ausführungsform der erfindungsgemäß verwendbaren Guanidinium-Hydroxide einsetzbaren Salze, insbesondere die Hydrochloride, sind bekannt (vgl. WO 01/85676). Beispielsweise erhält man eine weiters bevorzugte Ausführungsform des erfindungsgemäß verwendbaren polymeren Guanidinium-Hydroxid Poly-[2-(2-ethoxy-ethoxyethyl)-guanidinium-hydroxid] mit einer mittleren Molekularmasse von etwa 1000, indem man 4,43 Mol Guanidinium-Hydrochlorid in 4,03 Mol Triethylenglykoldiamin bei 50°C löst. Anschließend erwärmt man auf 120°C und rührt 2 Stunden bei dieser Temperatur. Danach wird die Temperatur 2 Stunden gehalten, dann ein Vakuum (0,1 bar) angelegt und 2 weitere Stunden unter Vakuum bei 170°C gerührt. Anschließend wird auf Normaldruck belüftet, auf 120°C abkühlen gelassen und mit entmineralisiertem Wasser auf ca. 50 % verdünnt. Mit Phosphorsäure wird auf einen pH-Wert von ca. 6 neutralisiert, abkühlen gelassen und auf die gewünschte Konzentration verdünnt. Anschließend wird die Hydroxid-Form hergestellt, indem die zuvor erhaltene Lösung mit einem stark alkalischen Anionenaustauscher in Hydroxid-Form behandelt wird, zweckmäßigerweise in einer Austauschersäule (z.B. "Ambersep 900 OH" oder "Lewatit MP 500"). So erhält man das erfindungsgemäß verwendbare Guanidinium-Hydroxid mit folgenden Charakteristika: Summenformel: C₂₁H₅₁N₉O₅ bzw. 49,5 % Kohlenstoff, 10 % Wasserstoff, 24,8 % Stickstoff und 15,7 % Sauerstoff.

Eine weitere bevorzugte Ausführungsform des erfindungsgemäß verwendbaren Guanidinium-Hydroxids besteht darin, dass als Vertreter der Reihe der Polyoxyalkylen-Guanidin-Salze solche unter Einsatz von Triethylenglykoldiamin (relative Molekularmasse: 148), von Polyoxypropylendiamin (relative Molekularmasse: 230) sowie von Polyoxyethylendiamin (relative Molekularmasse: 600), oder auch von Polyhexamethylendiamin (relative Molekularmasse: erhalten werden.

Eine weitere bevorzugte Ausführungsform des erfindungsgemäß verwendbaren Guanidinium-Hydroxids ist dadurch gekennzeichnet, dass als das polymere Guanidin-Derivat Poly-[2-(2-ethoxy-ethoxyethyl)-guanidinium-hydroxid] mit mindestens 3 Guanidinium-Resten enthalten ist.

Weiterhin bevorzugt verwendbar sind Guanidinium-Hydroxide, bei denen das Polykondensationsprodukt in Salzform zuvor durch Polykondensation eines Guanidin-Säureadditionssalzes mit einem Alkylendiamin und einem Oxyalkylendiamin im Molverhältnis zwischen 4:1 und 1:4 (Alkylendiamin/Oxyalkylendiamin), bevorzugt zwischen 3:1 und 1:3, erhältlich ist.

Bevorzugt ist als Diamin ein Alkylendiamin der allgemeinen Formel

H₂N-(CH₂)ₙ-NH₂

vorgesehen, in welcher n eine ganze Zahl zwischen 2 und 10, insbesondere 6, ist.

Weiterhin bevorzugt ist als Oxyalkylendiamin eine Verbindung der allgemeinen Formel

H₂N-[CH₂)₂O)]ₘ-(CH₂)₂-NH₂

vorgesehen, in welcher m eine ganze Zahl zwischen 2 und 5, insbesondere 2, ist.

Die mittlere Molekularmasse des erfindungsgemäß verwendbaren Guanidinium-Hydroxids liegt bevorzugt im Bereich 500 bis 3.000, besonders bevorzugt im Bereich 500 bis 2.000, ganz besonders bevorzugt im Bereich 500 bis 1.500. Weiterhin bevorzugt ist eine mittlere Molekularmasse von 1000.

Bevorzugte Verwendungen des polymeren Guanidinium-Hydroxids sind
- als Vernebelungsmittel zum mikrobiellen Dekontaminieren;
- Dekontaminieren von Bausubstanz;
- als Konservierungsmittel für Wasch- und Reinigungsmittel;
- als Konservierungsmittel für Farben und Lacke;
- als Konservierungsmittel für Kosmetika:
- als antimikrobieller Zusatzstoff in natürlichen und synthetischen Polymeren und Leder, wobei die synthetischen Polymeren bevorzugt als Fasern oder Folien oder als Beschichtungsmaterial ausgeformt sind;
- als Schleimbekämpfungsmittel in der Papierherstellung und in der Erdölförderung;
   und
- als Additiv für Kühlschmiermittel;

Kühlschmiermittel werden bei der spanabhebenden Bearbeitung von Metallen gebraucht. Unter "Spanen" werden alle mechanischen Bearbeitungsverfahren verstanden, bei denen das Metall in die gewünschte Form gebracht wird, indem es in Form von Spänen abgetragen wird. Zu den spanabhebenden Bearbeitungstechniken zählen z.B. das Drehen, Bohren, Fräsen und Schleifen. Diese Tätigkeiten werden üblicherweise mit einer Drehmaschine oder einer Bohrmaschine ausgeführt.

Die Funktion des Kühlschmiermittels besteht nun darin, dass es sowohl die Reibung zwischen dem metallischen Werkstück und dem Werkzeug verringert, wodurch der Verschleiß des Werkzeugs verringert wird, als auch dem Erwärmen des Werkstoffs entgegenwirkt. Bei Temperaturen von über 1000 °C gestatten Kühlschmiermittel höhere Bearbeitungsgeschwindigkeiten. Das Kühlschmiermittel kann aber auch noch dazu dienen, die Späne aus dem Arbeitsfeld abzuspülen und das metallische Werkstück vor Korrosion zu schützen.

Im Stand der Technik sind verschiedenste Kühlschmiermittel bekannt. Es gibt z.B. nicht mit Wasser mischbare Mineralöle mit oder ohne Additive, wobei diese Additive Fettsäuren oder schwefel- und phosphorhältige organische Verbindungen sein können. Ferner sind milchigweiße mineralölhaltige Öl-in-Wasser-Emulsionen bekannt. Mineralölfreie Lösungen wiederum sind durchsichtig und enthalten Natriumcarbonat oder -nitrit in Wasser.

Als Additive dienen Stoffe, die mit ihren chemischen Eigenschaften einen Zusatznutzen bringen, wie z.B. Rostschutz, eine höhere Schmierwirkung bei extremen Bedingungen, ein Verhindern von Schaumbildung oder das Bremsen des Wachstums von Bakterien, Hefen und Pilzen in der Emulsion.

Die Entsorgung von gebrauchten Kühlschmiermitteln ist aufwendig, sodass der Trend besteht, die Mittel nach Verwendung zu reinigen und mehrfach zu verwenden. Diese mehrfach verwendeten Kühlschmiermittel sind aber besonders anfällig für Mikroorganismen. Wenn die Zahl der Keime zu hoch ist, kann die Lösung "kippen".

Bei dem eingesetzten Guanidinium-Hydroxid handelt es sich bevorzugt um Poly-[2-(2-ethoxy-ethoxyethyl)-guanidinium-hydroxid] mit einer mittleren Molekularmasse von etwa 1000 (A-1), einer mittleren Molekularmasse von etwa 1500 (A-2), einer mittleren Molekularmasse: von etwa 500 (A-3), einer mittleren Molekularmasse von etwa 2000 (A-4), einer mittleren Molekularmasse von etwa 2500 (A-5) oder einer mittleren Molekularmasse von etwa 3000 (A-6), sowie außerdem ein Polykondensat aus Poly-(hexamethylen-guanidinium-hydroxid) und Poly-[2-(2-ethoxy)-ethoxyethyl)-guanidinium-hydroxid] im Molverhältnis 3:1 (A-7).

Die erfindungsgemäßen Mittel können als solche oder in Abhängigkeit von ihren jeweiligen physikalischen und/oder chemischen Eigenschaften in Form ihrer Formulierungen oder den daraus bereiteten Anwendungsformen, wie Aerosole, Kapselsuspensionen, Kaltnebelkonzentra te, Heißnebelkonzentrate, verkapselte Granulate, Feingranulate, fließfähige Konzentrate für die Behandlung von mikrobiell kontaminiertem Material, gebrauchsfertige Lösungen, verstäubbare Pulver, emulgierbare Konzentrate, Öl-in-Wasser-Emulsionen, Wasser-in-Öl-Emulsionen, Makrogranulate, Mikrogranulate, Öl dispergierbare Pulver, Öl mischbare fließfähige Konzentrate, Öl mischbare Flüssigkeiten, Schäume, Pasten, Pestizid ummanteltes Saatgut, Suspensionskonzentrate, Suspensions-Emulsions-Konzentrate, lösliche Konzentrate, Suspensionen, Spritzpulver, lösliche Pulver, Stäubemittel und Granulate, wasserlösliche Granulate oder Tabletten, wasserlösliche Pulver und benetzbare Pulver-Formulierungen eingesetzt werden.

### Beispiele

Nachfolgend werden die hervorragenden Eigenschaften des erfindungsgemäß verwendbaren Guanidin-Hydroxids näher beschrieben.

### Beispiel 1

Dieses Beispiel soll die Überlegenheit der OH-Form des polymeren Guanidins gegenüber der *Chlorid-Form dokumentieren.*

**Tabelle : Wirksamkeitsuntersuchungen an der OH-Form**

| Konzentration | MHK (mg/l) | | | | |
|---|---|---|---|---|---|
| | S. aureus ATCC 6538 | E.coli ATCC 10536 | P. aeruginosa ATCC 15422 | C. albicans ATCC 10231 | S. cerevisiae LS 17 |
| Lösung 10% | 1 | 2 | 32 | 32 | 4 |
| Lösung 8% | 0,5 | 1 | 16 | 16 | 4 |
| Lösung 25% | 0,25 | 1 | 8 | 8 | 4 |

MHK: minimale Hemmkonzentration, bestimmt mittels Mikrodilutionsmethode

**Tabelle : Wirksamkeitsuntersuchungen an der Cl-Form**

| | MHK (mg/l) | | | | |
|---|---|---|---|---|---|
| | S. aureus ATCC 6538 | E.coli ATCC 10536 | P. aeruginosa ATCC 15422 | C. albicans ATCC 10231 | S. cerevisiae LS 17 |
| Lösung 25% | 2-8 | 1-2 | 16-32 | 16-32 | 8 |

Durch den Austausch der Chloridionen durch Hydoxid erschließt sich somit ein wesentlich größerer Anwendungsbereich der Guanidinderivate, da insbesonders bei regelmäßiger Anwendung als Konservierungs-, Schutz- oder Desinfektionsmittel eine chloridinduzierte Lochkorrosion an Metallen vermieden wird. Ebenso ist die Verwendung als Additiv für Kühlschmierstoffe insbesondere bei Bearbeitung von Werkstücken aus Aluminium nur in der Hydroxidform möglich.

Zusätzlich wird durch diese Modifikation die Umweltverträglichkeit der Produkte wesentlich verbessert, da Chlorid im Grundwasser die Löslichkeit von Schwermetallen erhöht, die Böden versalzt und im Falle der thermischen Entsorgung bzw. im Brandfall Salzsäure bildet.

### Beispiel 2

Die Wirksamkeit als Topfkonservierungsmittel wurde beispielsweise in einer mineralischen Innenwandfarbe durch Zusatz von 0,2 bis 2 w.% des Guanidinderivates mit verkeimtem Leitungswasser getestet, wobei ab 1% eine vollständige Keimabtötung nachweisbar ist. Die Farbmuster wurden hierfür 1:10 (vol. Teil Farbe: vol. Teil Wasser) mit verkeimtem Leitungswasser verdünnt. Je 100 µl dieser Verdünnung wurden auf TSA-Platten (Bakterien-Nährmedium) ausgestrichen, 24 Stunden bei 35°C bebrütet und anschließend die Gesamtkeimzahl in Form von Kolonien bildende Einheiten (KBE) ausgezählt.

**Tabelle**

| **Probenbescheibung** | **KBE/ 100 µl Farb-Wassergemisch*** |
|---|---|
| Unkonservierte Farbe | 41 |
| Farbe mit 1% Guanidinderivat, über Pigmentpaste dispergiert | 7,5 |
| Farbe mit 2% Guanidinderivat über Pigmentpaste dispergiert | 0 |
| Farbe mit 0,2% Guanidinderivat, über V-Lösung zugesetzt | 33,5 |
| Farbe mit 1 % Guanidinderivat über V-Lösung zugesetzt | 0 |
| Farbe mit 2% Guandidinderivat, über V-Lösung zugesetzt | 0 |
| Herkömmlich konservierte Farbe | 0 |

| | |
|---|---|
| *KBE: Kolonienbildende Einheiten, arithm. Mittelwert zweier Bestimmungen | |

### Beispiel 3

Basierend auf der guten Haut und Schleimhautverträglichkeit (nicht reizend auf der Haut und in den Augen, keine Sensiblisierung) sind die gegenständlichen Guanidinderivate auch als Konservierungsmittel für Kosmetika und sogar zur direkten Applikation auf der Haut als Desinfektionsmittel geeignet.

**Tabelle**

| **Studie** | **Ergebnis** |
|---|---|
| Akute orale Toxizität LD 50 oral, Ratte, OECD 423 | >2000 mg/kg |
| Akute dermale Toxizität LD 50 dermal, OECD 402 | >2000 mg/kg |
| Akute Reizung der Haut, OECD 404 | Nicht reizend |
| Akute Reizung der Augen, OECD 405 | Nicht reizend |
| Sensibilisierung: Local lymph node assay | Nicht Haut sensibilisierend |

### Beispiel 4

Die erfindungsgemäß verwendbaren polymeren Guanidin-Hydroxide sind in Wasser löslich und können mit herkömmlichen Vemebelungsgeräten in Form feinster Tröpfchen, quasi als Wirkstoffnebel in geschlossenen Räumen, zur Raumluft- und Oberflächenentkeimung ausgebracht werden.

Diese Vernebelungsapplikation ermöglicht die rasche Bekämpfung von Bakterien, Pilzen und Viren. Es können sämtliche kontaminierte Räumlichkeiten, wie Schimmelpilz belastete Wohnungen, Klimaanlagen, keimbelastete Lebensmittelproduktionsstätten, Nutztierhaltungsbereiche und auch öffentliche Einrichtungen (Krankenhäuser, Spa-Bereiche, Schulen) rasch und effektiv behandelt werden. Für eine wirksame Behandlung sollten die zu behandelnden Räumlichkeiten geschlossen sein.

Die Vernebelungsapplikation mit den erfindungsgemäßen polymeren Guanidin-Hydroxiden hat gegenüber den herkömmlichen Wisch- bzw. Sprühanwendungen folgende Vorteile:
(a) Nicht nur kontaminierte Oberflächen werden lückenlos erfasst, sondern auch die Raumluft selbst wird dekontaminiert.
(b) Der Wirkstoff beseitigt nicht nur Krankheitserreger sondern auch in der Luft befindliche, unangenehme Gerüche.
(c) Das enthaltene Wasser ist in Nebelform auch ein ideales Medium zum Transport des Wirkstoffes in ansonsten schwer behandelbare Ritzen, Fugen und Spalten.
(d) Rasche, automatisierbare und kontrollierbare Applikation
(e) Hohe Wirksamkeit trotz niedriger Anwendungskonzentrationen Die geringen Tröpfchengrößen im µm ermöglichen ein rasches Abdampfen des Wassers und somit ein Ankonzentrieren des Wirkstoffes an der Oberfläche von Partikeln und Keimen.
(f) Der trockene Nebel verhindert schädliche Feuchte (Elektrogeräte, Feuchtigkeitskorrosion)
(g) Der Wirkstoff haftet sich während der Vernebelungs-Phase auf sämtlichen Partikeln und Oberflächen bzw. Wänden an und bildet somit auch einen präventiven, anhaltend wirksamen Schutzfilm.

Die Erfindung betrifft somit auch die Dekontamination mittels Vernebelung des polymeren Guanidinderivates in Wohnungen, Klimaanlagen und Lüftungsschächten, Hotels und Gastronomiebereichen, Lebensmittel- und Pharmaproduktionsstätten, Lager- und Transporteinrichtungen insbesonders Schiffen und Autos, Nutztierhaltungsbereichen, Laboratorien und auch öffentliche Einrichtungen wie Krankenhäuser, Spa-Bereiche und Schulen.

Die eingesetzte Wirkstoffmenge ist auf ein benötigtes Minimum optimiert. Die Vorgehensweise und die Art der Vernebelungsgeräte ist an den Einsatzbereich und Raumgröße angepasst.

Durchschnittlich werden 0,025 Liter bis maximal 0,075 Liter pro m³ Raumvolumen einer 0,08 bis 2% (w/w) Guanidinderivat enthaltenden Lösung ausgebracht.

Die Effizienz und Wirkung dieser Vernebelungsanwendung wurde beispielweise im Gärkeller und im Labor einer Brauerei geprüft. Hierfür wurden Proben von Oberflächen vor und nach der Behandlung mittels Tupfer entnommen und auf Nährböden ausgestrichen und ausgewertet. (-) bedeutet in der Tabelle kein Wachstum, (+) sehr schwacher Keimgehalt, + geringer Keimgehalt, ++ mittlerer Keimgehalt, +++ starker Keimgehalt, ++++sehr starker Keimgehalt, R Rasenwachstum, nn nicht nachgewiesen.
Es konnte eine deutliche Reduktion der Gesamtkeimzahl (Bakterien, Enterobakterien, Hefen und Schimmelpilze) nachgewiesen werden.

**Tabelle: Labor**

| Probeentnahmestelle | Ergebnis der Untersuchung | | | | | | | |
|---|---|---|---|---|---|---|---|---|
| | Gesamtkeimzahl | | Enterobakterien | | Hefen | | Schimmel | |
| | vorher | nachher | vorher | nachher | vorher | nachher | vorher | nachher |
| Lichtschalter | + | - | - | - | - | - | - | - |
| Ausgang der Klimaanlage | + | - | + | - | - | - | - | - |
| Linke Seitenwand | + | - | - | - | + | - | + | - |
| Fensterbank | + | - | - | - | ++ | - | - | - |
| Fußbodenleiste unterhalb des Fensters | ++ | + | - | - | - | - | - | - |
| Lichtschalter am Fenster in der Mitte | ++ | - | - | - | - | - | - | - |
| Wasserhahn | ++ | - | - | - | + | - | - | - |
| Holzschrank rechts | R | - | R | - | + | - | - | - |
| Fugen am Kacheltisch | R | + | R | + | ++ | - | + | - |
| Lüftungsschacht im hinteren Bereich des Labors | ++ | - | - | - | - | - | + | - |
| Stahlschiene über dem letzten Fenster | +++ | - | - | - | - | - | +++ | - |

**Tabelle: Gärkeller**

| Probeentnahmestelle | Ergebnis der Untersuchung | | | | | | | |
|---|---|---|---|---|---|---|---|---|
| | Gesamtkeimzahl | | Enterobakterien | | Hefen | | Schimmel | |
| | vorher | nachher | vorher | nachher | vorher | nachher | vorher | nachher |
| Treppenwand unterhalb der Treppe | ++ | - | - | - | ++ | - | + | - |
| Kabelkanal der Treppenwand | - | - | - | - | - | - | - | - |
| Schimmelfeld über dem Kabel | - | - | - | - | - | - | ++ | - |
| Lüftungsschacht | - | - | - | - | - | - | + | - |
| Gegenwand auf dem Sims | R | - | R | - | ++ | - | ++ | - |
| Türsturz Gegenwand | +++ | ++ | +++ | - | ++ | - | +++ | - |
| Rechte Wand neben der Tür | ++ | - | ++ | - | + | - | - | - |
| Rechte Wand neben der Säule | +++ | + | ++ | + | + | - | - | - |
| Edelstahlblech (Mitte) | R | + | R | - | R | - | ++ | - |
| Ventilsäule Mitte des Raumes | R | ++ | R | + | ++ | - | ++ | - |
| Fugen am Elektroschrank | R | ++ | R | + | +++ | - | + | - |
| Tank 202 | R | + | R | + | - | - | + | - |
| Oberer Gang Fugen am Wasserhahn | R | ++ | +++ | - | - | - | - | - |
| Elektromotor im oberen Gang | R | ++ | +++ | + | +++ | - | + | - |
| Steckdose im oberen Gang | R | ++ | R | + | ++ | | - | - |

## Patentansprüche

1. Nicht therapeutische Verwendung von polymeren Guanidinium-Hydroxiden zur Bekämpfung von Mikroorganismen.

2. Verwendung gemäß Anspruch 1 von polymeren Guanidinium-Hydroxiden auf Basis eines Diamins, welches Oxyalkylenketten und/oder Alkylengruppen zwischen zwei Aminogruppen enthält, zur Bekämpfung von Mikroorganismen.

3. Verwendung gemäß Anspruch 2 von polymeren Guanidinium-Hydroxiden auf Basis eines Diamins, welches Oxyalkylenketten und/oder Alkylengruppen zwischen zwei Aminogruppen enthält und erhältlich ist durch Polykondensation eines Guanidin-Säureadditionssalzes mit dem Diamin, wobei ein Polykondensationsprodukt in Salzform erhalten wird, welches anschließend durch basischen Anionenaustausch in die Hydroxidform überführt wird, zur Bekämpfung von Mikroorganismen.

4. Verwendung gemäß einem der Ansprüche 1 bis 3, **dadurch gekennzeichnet, dass** das polymere Guanidinium-Hydroxid Poly-[2-(2-ethoxy-ethoxyethyl)-guanidinium-hydroxid] mit mindestens 3 Guanidiniumresten ist.

5. Verwendung gemäß einem der Ansprüche 3 oder 4, **dadurch gekennzeichnet, dass** das Polykondensationsprodukt in Salzform erhältlich ist durch Polykondensation eines Guanidin-Säureadditionssalzes mit einem Alkylendiamin und einem Oxyalkylendiamin im Molverhältnis zwischen 4:1 und 1:4 (Alkylendiamin/Oxyalkylendiamin).

6. Verwendung nach einem der Ansprüche 2 bis 5, **dadurch gekennzeichnet, dass** als Diamin ein Alkylendiamin der allgemeinen Formel
H₂N-(CH₂)ₙ-NH₂
vorgesehen ist, in welcher n eine ganze Zahl zwischen 2 und 10, insbesondere 6, ist.

7. Verwendung nach einem der Ansprüche 2 bis 6, **dadurch gekennzeichnet, dass** als Oxyalkylendiamin eine Verbindung der allgemeinen Formel
H₂N-[(CH₂)₂O]ₘ-(CH₂)₂-NH₂
vorgesehen ist, in welcher m eine ganze Zahl zwischen 2 und 5, insbesondere 2, ist.

8. Verwendung gemäß einem der Ansprüche 1 bis 7, **dadurch gekennzeichnet, dass** die mittlere Molekularmasse des polymeren Guanidinium-Hydroxids im Bereich 500 bis 3.000 liegt.

9. Verwendung eines polymeren Guanidinium-Hydroxids nach einem der Ansprüche 1 bis 8 als Additiv für Kühlschmiermittel.

10. Kühlschmiermittel für die spanabhebende Bearbeitung von Metallen enthaltend ein Additiv, **dadurch gekennzeichnet, dass** als Additiv ein polymeres Guanidinium-Hydroxid, wie in den Ansprüchen 1 bis 8 definiert, vorgesehen ist.

11. Verwendung eines polymeren Guanidinium-Hydroxids nach einem der Ansprüche 1 bis 8 als Vernebelungsmittel zum mikrobiellen Dekontaminieren.

12. Verwendung nach Anspruch 11 zum Dekontaminieren von Bausubstanz.

13. Verwendung eines polymeren Guanidinium-Hydroxids nach einem der Ansprüche 1 bis 8 als Konservierungsmittel für Wasch- und Reinigungsmittel.

14. Verwendung eines polymeren Guanidinium-Hydroxids nach einem der Ansprüche 1 bis 8 als Konservierungsmittel für Farben und Lacke.

15. Verwendung eines polymeren Guanidinium-Hydroxids nach einem der Ansprüche 1 bis 8 als Konservierungsmittel für Kosmetika.

16. Verwendung eines polymeren Guanidinium-Hydroxids nach einem der Ansprüche 1 bis 8 als antimikrobieller Zusatzstoff in natürlichen und synthetischen Polymeren und Leder.

17. Verwendung nach Anspruch 16, **dadurch gekennzeichnet, dass** die synthetischen Polymere als Fasern oder Folien oder als Beschichtungsmaterial ausgeformt sind.

18. Verwendung eines polymeren Guanidinium-Hydroxids nach einem der Ansprüche 1 bis 8 als Schleimbekämpfungsmittel in der Papierherstellung und in der Erdölförderung.

## Claims

1. Non-therapeutic use of polymeric guanidinium hydroxides for controlling microorganisms.

2. Use according to claim 1 of polymeric guanidinium hydroxides based on a diamine which contains oxyalkylene chains and/or alkylene groups between two amino groups, for controlling microorganisms.

3. Use according to claim 2 of polymeric guanidinium hydroxides based on a diamine which contains oxyalkylene chains and/or alkylene groups between two amino groups and is obtainable by polycondensation of a guanidine acid addition salt with the diamine, whereby a polycondensation product in the form of a salt is obtained, which subsequently is converted into the hydroxide form via basic anion exchange, for controlling microorganisms.

4. Use according to any of claims 1 to 3, **characterized in that** the polymeric guanidinium hydroxide is poly-[2-(2-ethoxy-ethoxyethyl)-guanidinium hydroxide] comprising at least 3 guanidinium groups.

5. Use according to any of claims 3 or 4, **characterized in that** the polycondensation product in salt form is obtainable by polycondensation of a guanidine acid addition salt with an alkylene diamine and an oxyalkylene diamine at a molar ratio ranging between 4:1 and 1:4 (alkylene diamine/oxyalkylene diamine).

6. Use according to any of claims 2 to 5, **characterized in that** an alkylene diamine of general formula
H₂N-(CH2)ₙ-NH₂
is provided as the diamine, wherein n is an integer between 2 and 10, in particular 6.

7. Use according to any of claims 2 to 6, **characterized in that** a compound of general formula
H₂N-[(CH₂)₂O]ₘ-(CH₂)₂-NH₂
is provided as the oxyalkylene diamine, wherein m is an integer between 2 and 5, in particular 2.

8. Use according to any of claims 1 to 7, **characterized in that** the average molecular mass of the polymeric guanidinium hydroxide ranges from 500 to 3,000.

9. Use of a polymeric guanidinium hydroxide according to any of claims 1 to 8 as an additive for cooling lubricants.

10. A cooling lubricant for the machining of metals containing an additive, **characterized in that** a polymeric guanidinium hydroxide as defined in claims 1 to 8 is provided as the additive.

11. Use of a polymeric guanidinium hydroxide according to any of claims 1 to 8 as an atomizing agent for microbial decontamination.

12. Use according to claim 11 for the decontamination of building structures.

13. Use of a polymeric guanidinium hydroxide according to any of claims 1 to 8 as a preservative for washing and cleaning agents.

14. Use of a polymeric guanidinium hydroxide according to any of claims 1 to 8 as a preservative for paints and lacquers.

15. Use of a polymeric guanidinium hydroxide according to any of claims 1 to 8 as a preservative for cosmetics.

16. Use of a polymeric guanidinium hydroxide according to any of claims 1 to 8 as an antimicrobial additive in natural and synthetic polymers and leather.

17. Use according to claim 16, **characterized in that** the synthetic polymers are formed as fibres or films or as coating materials.

18. Use of a polymeric guanidinium hydroxide according to any of claims 1 to 8 as an anti-slime agent in paper manufacture and petroleum production.

## Revendications

1. Utilisation non thérapeutique d'hydroxydes de guanidinium polymères dans la lutte contre les microorganismes.

2. Utilisation selon la revendication 1 d'hydroxydes de guanidinium polymères à base d'une diamine qui contient des chaînes d'oxyalkylène et/ou des groupes alkylène entre deux groupes amino, dans la lutte contre les microorganismes.

3. Utilisation selon la revendication 2 d'hydroxydes de guanidinium polymères à base d'une diamine qui contient des chaînes d'oxyalkylène et/ou des groupes alkylène entre deux groupes amino et qui est obtenue par polycondensation d'un sel d'addition d'acide de guanidine avec une diamine, le produit de polycondensation étant obtenu sous forme d'un sel qui est ensuite converti en forme hydroxyde par échange d'anions basiques, dans la lutte contre les microorganismes.

4. Utilisation selon l'une des revendications 1 à 3, **caractérisée en ce que** l'hydroxyde de guanidinium polymère est un poly-[hydroxyde de 2-(2-éthoxy-éthoxyéthyl)-guanidinium] qui contient au moins 3 groupes guanidinium.

5. Utilisation selon l'une des revendications 3 ou 4, **caractérisée en ce que** le produit de polycondensation est obtenu sous la forme d'un sel et par polycondensation d'un sel d'addition d'acide de guanidine avec une alkylène diamine et une oxyalkylène diamine dans une proportion molaire comprise entre 4:1 et 1:4 (alkylène diamine/oxyalkylène diamine).

6. Utilisation selon l'une des revendications 2 à 5, **caractérisée en ce qu'**il utilise comme diamine une alkylène diamine de formule générale
H₂N-(CH₂)ₙ-NH₂
dans laquelle n représente un nombre entier compris entre 2 et 10 et en particulier 6.

7. Utilisation selon l'une des revendications 2 à 6, **caractérisée en ce qu'**il utilise comme oxyalkylène diamine un composé de formule générale
H₂N-[(CH₂)₂O]ₘ-(CH₂)₂-NH₂
dans laquelle m est un nombre entier compris entre 2 et 5 et en particulier 2.

8. Utilisation selon l'une des revendications 1 à 7, **caractérisée en ce que** la masse moléculaire moyenne de l'hydroxyde de guanidinium polymère est comprise dans la plage de 500 à 3 000.

9. Utilisation d'un hydroxyde de guanidinium polymère selon l'une des revendications 1 à 8 comme additif pour lubrifiants de refroidissement.

10. Lubrifiant de refroidissement pour le traitement par enlèvement de matière de métaux, contenant un additif et **caractérisé en ce que** l'additif prévu est un hydroxyde de guanidinium polymère tel que défini dans les revendications 1 à 8.

11. Utilisation d'un hydroxyde de guanidinium polymère selon l'une des revendications 1 à 8 comme agent de brumisation en vue de la décontamination microbienne.

12. Utilisation selon la revendication 11 pour la décontamination de substances destinées à la construction.

13. Utilisation d'un hydroxyde de guanidinium polymère selon l'une des revendications 1 à 8 comme agent de conservation d'agents de lavage ou de nettoyage.

14. Utilisation d'un hydroxyde de guanidinium polymère selon l'une des revendications 1 à 8 comme agent de conservation de peintures et vernis.

15. Utilisation d'un hydroxyde de guanidinium polymère selon l'une des revendications 1 à 8 comme agent de conservation de cosmétiques.

16. Utilisation d'un hydroxyde de guanidinium polymère selon l'une des revendications 1 à 8 comme additif antimicrobien dans des polymères naturels ou synthétiques et le cuir.

17. Utilisation selon la revendication 16, **caractérisée en ce que** les polymères synthétiques sont façonnés en forme de fibres ou feuilles ou de matériau de revêtement.

18. Utilisation d'un hydroxyde de guanidinium polymère selon l'une des revendications 1 à 8 comme agent de lutte contre le mucilage dans la fabrication de papier et l'extraction de pétrole.
